# EUROPÄISCHE PATENTSCHRIFT

(11) **EP 0 555 744 B1**
(45) Veröffentlichungstag und Bekanntmachung des Hinweises auf die Patenterteilung: **12.04.1995**
(21) Anmeldenummer: 93101613.3
(22) Anmeldetag: 03.02.1993
(51) Int. Cl.: B62D 25/08, B60R 19/26

(54) **Radeinbau an Karosserien für Kraftfahrzeuge**
Wheel mounting in vehicle bodies
Montage de roue des véhicules automobiles

(30) Priorität: 10.02.1992 DE 4203783
(43) Veröffentlichungstag der Anmeldung: 18.08.1993
(73) Patentinhaber: Adam Opel Aktiengesellschaft, 65428 Rüsselsheim (DE); General Motors Espana, S.A., Figueruelas (Zaragoza) (ES)
(72) Erfinder: Mildner, Udo, Dipl.-Ing. (FH), W-6250 Limburg 9 (DE)
(74) Vertreter: Bergerin, Ralf, Dipl.-Ing.

(56) Entgegenhaltungen:
- EP-A- 0 200 154
- US-A- 5 024 482
- PATENT ABSTRACTS OF JAPAN vol. 7, no. 157 (M-227)(1302) 9. Juli 1983& JP-A-58 063 577 (Toyo Kogyo) 15.April 1983
- PATENT ABSTRACTS OF JAPAN vol. 9, no. 103 (M-377)(1826) 8. Mai 1985& JP-A-59 227 568 (20. Dezember 1984
- PATENT ABSTRACTS OF JAPAN vol. 10, no. 155 (M-485)(2211) 4. Juni 1986 & JP-A-61 009 379 (Mazda) 16. Januar 1986

## Beschreibung

Die Erfindung betrifft einen Radeinbau an Karosserien für Kraftfahrzeuge, insbesondere zur Aufnahme der Vorderräder von Personenkraftwagen, mit einer für die obere Befestigung eines Stoßdämpfers oder eines Federbeines vorgesehenen Halterung.

Ein solcher Radeinbau hat über die Halterung von dem Stoßdämpfer bzw. dem Federbein eingeleitete Kräfte sicher aufzunehmen und an die umgebenden tragenden Bauteile der Karosserie weiterzuleiten. Dabei soll die Halterung innerhalb des Karosserieverbandes starr angeordnet sein, damit die vorgegebene Geometrie der Radaufhängungselemente bei jeder Belastung erhalten bleibt und auch Knarr- und Knackgeräusche bei Lastwechseln vermieden werden. Andererseits soll der Bereich des Radeinbaues bei einem Crash zur Aufnahme von Verformungsenergie in der Lage sein und Aufprallkräfte nur begrenzt auf die Fahrgastzelle weiterleiten.

Es ist durch die DE-OS 16 30 384 bekannt geworden, zur sicheren Aufnahme der durch einen Stoßdämpfer übertragenen Kräfte eine sich annähernd über die gesamte Höhe des Radmuldenbleches sich erstreckende Konsole vorzusehen, die an einem Längsträger und dem Radmuldenblech durch Schweißen verbunden ist und die so die Kräfte auf das Blech des Radeinbaues verteilt und auf den Längsträger überträgt. Ein solche Konsole stellt jedoch einen beträchtlichen Aufwand an zusätzlichem Material dar. Ein gezielter Einfluß auf das Verformungsverhalten des Radeinbaues bei einem Crash ist damit nicht möglich.

Insbesondere zur Versteifung des Radeinbaues an der Stelle zwischen einer als Dom gestalteten Halterung eines Federbeines und dem Radeinbau wird mit DE-PS 27 20 598 vorgeschlagen, einen Teilbereich des zur Herstellung einer Öffnung unterhalb des Domes auszustanzenden Bleches mit dem Radeinbau verbunden zu belassen. Der verbleibende Abschnitt des Radeinbaues ist nach oben gestellt und bildet eine Wand eines zusätzlichen zusammen mit dem Dom und dem Radeinbau gebildeten Kastenprofils. Dieses Kastenprofil benötigt zwar nur geringfügig zusätzliches Material und es versteift auch in der beabsichtigten Art den Radeinbau, es macht jedoch den Radeinbau auch in Längsrichtung relativ hart, so daß bei einem Frontalcrash erhebliche Kräfte in Richtung der vorderen Säulen der Karosserie übertragen werden.

Um insbesondere die Weiterleitung von Kräften von dem Radeinbau auf die vorderen Säulen im Falle einer Kollision zu reduzieren wird mit der DE-OS 29 44 538 vorgeschlagen, den oberen Bereich des Radeinbaus nahe der Halterung des Federbeines nicht als geschlossenen kastenförmigen Längsträger auszubilden, sondern die Halterung zusammen mit einem flächigen Knotenblech direkt mit dem seitlichen Verkleidungsteil zu verbinden. Damit wird dieser Verbund zwar die bei einer Kollision auftretenden Frontalkräfte nur noch reduziert an die vorderen Säulen der Fahrgastzelle weiterleiten, aber die Verformungssteifigkeit dieses Verbundes gegenüber den vom Federbein eingeleiteten normalen Kräften im Fahrbetrieb ist ebenfalls reduziert, so daß Karosserieverwindungen in diesem Bereich mit ihren nachteiligen Folgen wie beispielsweise Knistergeräuschen und ungewollten Nachgiebigkeiten der Radaufhängungselemente auftreten können.

Der Erfindung liegt somit die Aufgabe zugrunde, einen Radeinbau der eingangs genannten Art zu schaffen, bei dem die durch ein Federbein oder durch Stoßdämpfer übertragenen Kräfte sicher aufgenommen und in den Verbund der Karosserie weitergeleitet werden, der Karosserieverbund im Bereich des Radeinbaues verformungssteif gegenüber diesen Kräften ist und trotzdem im Falle einer Kollision der Verbund des Radeinbaues nur reduziert Kräfte auf die vorderen Säulen der Fahrgastzelle weiterleitet und dabei selbst Verformungsarbeit aufnehmen kann.

Erfindungsgemäß wird diese Aufgabe dadurch gelöst, daß der Radeinbau nahe der Auflagekante des Kotflügels mit einer Strebe verbunden ist, welche über einen Längenabschnitt zusammen mit dem Radeinbau ein Kastenprofil bildet, das Kastenprofil im Bereich der Halterung durch einen Ausschnitt im Radeinbau einseitig geöffnet ist und die Halterung mit einem lappenartigen Fortsatz in den Ausschnitt bis zur senkrechten Wand der Strebe hineinragt und mit dieser verbunden ist.

Dieser Ausschnitt ermöglicht es, die Längssteifigkeit des Karosserieverbundes im Bereich des Radeinbaues auch bei Vorhandensein eines kastenförmigen Profils im oberen Bereich des Radeinbaues so anzupassen, daß die dadurch übertragenen Längskräfte bei einem Crash nicht zu Verformung der vorderen Säulen der Fahrgastzelle führen. Gleichzeitig kann aber durch die Strebe, welche über einen Bereich des Radeinbaues ein geschlossenes Kastenprofil bildet, eine hohe Gestaltfestigkeit gegen Verformungen durch die über ein Federbein bzw. einen Stoßdämpfer an der Halterung eingeleiteten Kräfte erzielt werden.

Der Ausschnitt wird vorzugsweise in seiner Länge so bemessen, daß er der Breite des lappenartigen Fortsatzes entspricht. Er kann jedoch auch länger ausgebildet sein als die Breite des Lappens und so eine definierte an dieser Stelle gewollte Weichheit des Karosserieverbundes hervorrufen.

Der Lappen kann auch so geformt sein, daß er mit Seitenteilen an einer oder an beiden Seiten des Ausschnittes den Querschnitt des kastenförmigen Profils verschließt, indem die Seitenteile an den Wandungen der Strebe befestigt sind.

Damit kann ein gezielter Eingriff auf die Steifigkeit des Karosserieverbundes erreicht werden.

Die Halterung kann sich auch flächig an der zur Fahrzeugmitte hin befindlichen Seite erstrecken und eventuell bis zu einem an der unteren Kante des Radeinbaues verlaufenden Vorderrahmens reichen.

Damit können die vom Federbein übernommenen Kräfte sehr weitflächig in den Karosserieverbund eingeleitet werden.

Ein Ausführungsbeispiel der Erfindung ist nachstehend anhand von Zeichnungen näher beschrieben. Es zeigen:

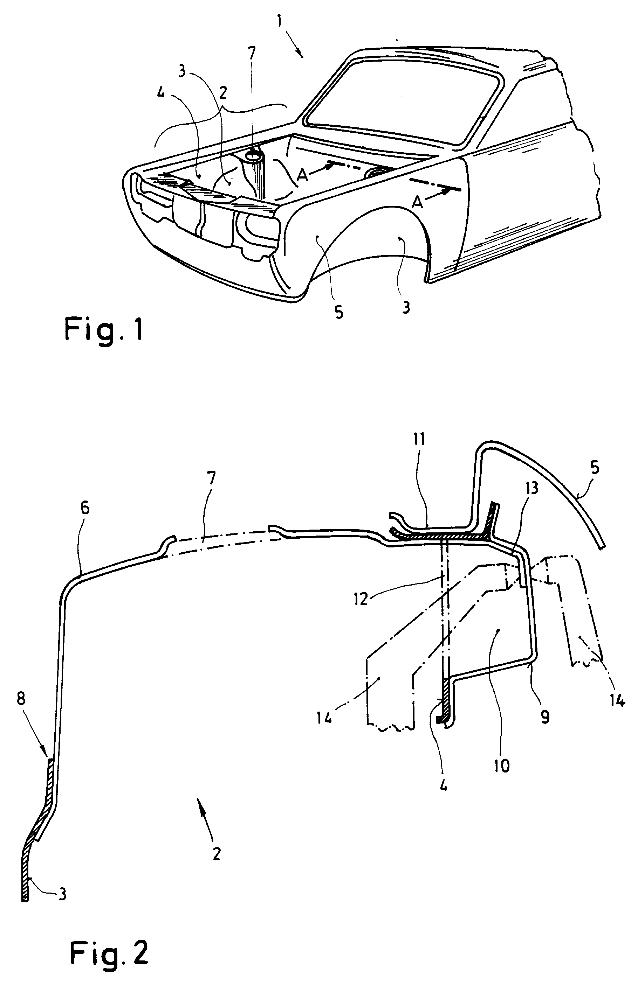

- Fig. 1: den vorderen Bereich einer Karosserie eines Kraftfahrzeuges;
- Fig. 2: einen senkrechten Schnitt entlang der Linie A - A in Figur 1.

Eine Karosserie 1 eines Kraftfahrzeuges weist im vorderen Bereich jeweils links und rechts einen Radeinbau 2 auf, der jeweils aus einem Radmuldenblech 3 und einer Moraumseitenwand 4 besteht. Am Kraftfahrzeug ist diese Partie des Radeinbaues 2 durch die vorderen Kotflügel 5 abgedeckt. Am Radeinbau 2 ist oberhalb der Vorderachse eine Halterung 6 für die Befestigung 7 eines Federbeines (nicht dargestellt) eingeschweißt, indem dafür ein entsprechender Ausschnitt 8 im Radeinbau 2 vorgesehen ist. Die die Motorraumseitenwand bildende Partie des Radeinbaues 2 ist unterhalb des Kotflügels 5 mit einer Strebe 9 verbunden, welche zusammen mit dem Radeinbau 2, speziell dem senkrecht verlaufenden Teil der Motorraumseitenwand 4, ein Kastenprofil 10 bildet. Das Kastenprofil 10 verläuft unterhalb des Kotflügels 5, wobei sich der Kotflügel 5 mit einer Auflagekante 11 auf dem Radeinbau 2 (schraffiert dargestellt) in seiner Länge abstützt und dort befestigt ist. Im Bereich der Halterung 7 ist der senkrecht verlaufende, die Motorraumseitenwand 4 bildende Teil des Radeinbaues 2 mit einem Ausschnitt 12 versehen, der sich bis an die obere Begrenzung des Kastenprofils 10 erstreckt. In diesen Ausschnitt 12 hinein erstreckt sich ein lappenartiger Fortsatz 13 der Halterung 6, und zwar bis zur inneren Begrenzung der Strebe 9. Die Länge des Ausschnittes 12 muß daher mindestens so groß sein wie die Breite des Fortsatzes 13 in Draufsicht gesehen; sie kann jedoch auch länger bemessen sein. An dem Fortsatz 13 können sich Seitenteile (nicht dargestellt) befinden, welche den Querschnitt des Kastenprofils 10 an einer oder an beiden Seiten des Fortsatzes 13 verschließen. Die Halterung 6 wird von unten her in den Radeinbau 2 eingefügt und kann mittels Punktschweißen mit dem Radeinbau 2 verbunden werden. Eine weitere Verbindung neben der üblichen Verbindung mit dem Radeinbau 2 ist mit der Strebe 9 möglich, wobei auch hier das wirtschaftliche Punktschweißen zur Anwendung kommen kann, da durch den Ausschnitt 12 der eine Elektrodenarm 14 einer Punktschweißzange (strichpunktiert dargestellt) greifen kann. Die Halterung 6 kann auch entlang der Wandung des Radmuldenbleches 3 als Verstärkung nach unten geführt werden und dort bis zu einem eventuell vorhandenen Rahmenprofil reichen. Mit einer solchen Konstruktion ist es auch relativ einfach möglich, die Strebe 9 nach vorne zu verlängern und mittels Punktschweißen zu befestigen. Damit gelingt es, den Vorderbau einer Karosserie modellbezogen in seiner Festigkeit zu gestalten. Ein solcher Radeinbau 2 ist in der Lage, die über die Befestigung 7 des Federbeines bzw. Stoßdämpfers eingeleiteten Kräfte großflächig auf den tragenden Verband der Karosserie 1 zu übertragen, wobei sowohl das Radmuldenblech 3 und die eventuell daran anschließenden Rahmenprofile als auch unmittelbar der Steg 9 einbezogen sind. Trotzdem wird das von dem Steg 9 und dem Radeinbau 2 gebildete Kastenprofil 10 bei einem Frontalcrash nur begrenzt Kräfte in Richtung der Fahrgastzelle übertragen können, da infolge des Ausschnittes 12 das Kastenprofil 10 im Bereich des Ausschnittes 12 ausknicken wird. Dagegen kann das Kastenprofil 10 die nahe des Ausschnittes 12 eingeleiteten Kräfte sehr gut übertragen, da sie dort als Biegemomente aufgenommen werden und diese infolge der Kürze des wirksamen Hebelarmes nur gering sind. Das gilt auch für die eingeleiteten Torsionskräfte. Damit bleibt der gesamte Vorderaufbau trotz Vorhandenseins eines hohen Energieaufnahmevermögens bei einem frontalen Crash während des Betriebes außerordentlich steif gegenüber Verwindungen und Biegekräften.

## Patentansprüche

1. Radeinbau an Karosserien für Kraftfahrzeuge, insbesondere zur Aufnahme der Vorderräder von Personenkraftwagen, mit einer für die obere Befestigung (7) eines Stoßdämpfers oder Federbeines vorgesehenen Halterung (6), dadurch gekennzeichnet, daß der Radeinbau (2) nahe einer Auflagekante (11) des Kotflügels (5) mit einer Strebe (9) verbunden ist, welche über einen Längenabschnitt zusammen mit dem Radeinbau (2) ein Kastenprofil (10) bildet, das Kastenprofil (10) im Bereich der Halterung (6) durch einen Ausschnitt (12) im Radeinbau (2) einseitig geöffnet ist und die Halterung (6) mit einem lappenartigen Fortsatz (13) in den Ausschnitt (12) bis zur senkrechten Wand der Strebe (9) hineinragt und mit dieser verbunden ist.

2. Radeinbau nach Anspruch 1, dadurch gekennzeichnet, daß der Ausschnitt (12) in Fahrzeuglängsrichtung der Breite des lappenartigen Fortsatzes (13) entspricht.

3. Radeinbau nach Anspruch 1, dadurch gekennzeichnet, daß der Ausschnitt (12) in Fahrzeuglängsrichtung länger ausgebildet ist als der lappenartige Fortsatz (13).

4. Radeinbau nach Anspruch 1 bis 3, dadurch gekennzeichnet, daß der in den Ausschnitt (12) greifende Lappen (13) mit Seitenteilen versehen ist, welche mit den Wandungen des Kastenprofils (10) verbunden sind und den Querschnitt des Kastenprofils (10) verschließen.

5. Radeinbau nach Anspruch 1 bis 4, dadurch gekennzeichnet, daß sich die Halterung (6) flächig an der zur Fahrzeugmitte hin befindlichen Seite (Radmuldenblech 3) des Radeinbaues (2) erstreckt.

6. Radeinbau nach Anspruch 5, dadurch gekennzeichnet, daß die Halterung (6) am Radmuldenblech (3) entlang bis zu einem an der unteren Kante des Radmuldenbleches (3) verlaufenden Vorderrahmen führt.

7. Radeinbau nach Anspruch 1 bis 6, dadurch gekennzeichnet, daß die Strebe (9) nach vorn verlängert ist.

## Claims

1. Wheel mounting in bodies of motor vehicles, especially for receiving the front wheels of cars, with a holding means (6) provided for the top attachment (7) of a shock absorber or telescopic leg, **characterised** in that close to a support edge (11) of the wing (5) the wheel mounting (2) is connected to a strut (9) which through a longitudinal section together with the wheel mounting (2) forms a box profile (10), in the region of the holding means (6) the box profile (10) is opened on one side by a cut-out (12) in the wheel mounting (2) and the holding means (6) with a flap-like extension (13) projects into the cut-out (12) up to the vertical wall of the strut (9) and is connected to the same.

2. Wheel mounting according to claim 1, **characterised** in that in the longitudinal direction of the vehicle the cut-out (12) corresponds to the width of the flap-like extension (13).

3. Wheel mounting according to claim 1, **characterised** in that in the longitudinal direction of the vehicle the cut-out (12) is longer than the flap-like extension (13).

4. Wheel mounting according to claim 1 to 3, **characterised** in that flap (13) engaging the cut-out (12) is provided with side parts which are connected with the walls of the box profile (10) and shut the cross-section of the box profile (10).

5. Wheel mounting according to claim 1 to 4, **characterised** in that the holding means (6) extends with a flat surface on the side situated towards the vehicle centre (wheel recess 3) of the wheel mounting (2).

6. Wheel mounting according to claim 5, **characterised** in that the holding means (6) runs along the wheel recess (3) to a front frame extending to the lower edge of the wheel recess (3).

7. Wheel mounting according to claim 1 to 6, **characterised** in that the strut (9) is extended towards the front.

## Revendications

1. Passage de roue sur des carrosseries de véhicules automobiles, en particulier pour recevoir les roues avant de voitures automobiles, comprenant un support (6) prévu pour la fixation supérieure (7) d'un amortisseur ou d'une jambe de suspension élastique, caractérisé par le fait que le passage de roue (2) est relié au voisinage d'un bord d'appui (11) de l'aile (5) à une entretoise (9) qui forme un profil en caisson (10) sur un tronçon de longueur, conjointement avec le passage de roues (2), le profil en caisson (10) est ouvert unilatéralement dans la zone du support (6) par une découpe (12) dans le passage de roue (2) et le support (6) comporte un prolongement (13) en forme de patte qui pénètre dans la découpe (12) jusqu'à la paroi verticale de l'entretoise (9) et est relié à celle-ci.

2. Passage de roue suivant revendication 1, caractérisé par le fait que la découpe (12), dans la direction longitudinale du véhicule, correspond à la largeur du prolongement (13) en forme de patte.

3. Passage de roue suivant revendication 1, caractérisé par le fait que la découpe (13) dans la direction longitudinale du véhicule, est plus longue que le prolongement (13) en forme de patte.

4. Passage de roue suivant revendication 1 à 3, caractérisé par le fait que la patte (13) pénétrant dans la découpe (12) est munie de parties latérales qui sont reliées aux parois du profil en caisson (10) et obturent la section du profil en caisson (10).

5. Passage de roue suivant revendication 1 à 4, caractérisé par le fait que le support (6) s'étend à plat sur le côté (coquille pare-boue 3) du passage de roue (2), tourné vers le milieu du véhicule.

6. Passage de roue suivant revendication 5, caractérisé par le fait que le support (6) s'étend le long de la coquille pare-boue (3) jusqu'à un cadre avant situé au niveau du bord inférieur de la coquille pare-boue (3).

7. Passage de roue suivant revendication 1 à 6, caractérisé par le fait que l'entretoise (9) est prolongée vers l'avant.
